# EUROPÄISCHE PATENTSCHRIFT

(11) **EP 2 625 763 B1**
(45) Veröffentlichungstag und Bekanntmachung des Hinweises auf die Patenterteilung: **04.11.2015**
(21) Anmeldenummer: 11754638.2
(22) Anmeldetag: 26.08.2011
(51) Int. Cl.: H02J 7/00

(54) **VERFAHREN UND LADESTATION ZUM ELEKTRISCHEN AUFLADEN EINES ELEKTRISCHEN ENERGIESPEICHERS**
METHOD AND CHARGING STATION FOR ELECTRICALLY CHARGING AN ELECTRICAL ENERGY STORE
PROCÉDÉ ET STATION DE CHARGE POUR LA CHARGE ÉLECTRIQUE D'UN ACCUMULATEUR D'ÉNERGIE ÉLECTRIQUE

(30) Priorität: 08.10.2010 DE 102010042227
(43) Veröffentlichungstag der Anmeldung: 14.08.2013
(73) Patentinhaber: Robert Bosch GmbH, 70442 Stuttgart (DE)
(72) Erfinder: PETEREIT, Steffen, 71691 Freiberg A. N. (DE); KOCH, Christoph, 70178 Stuttgart (DE); GRAEFENSTEIN, Juergen, 70191 Stuttgart (DE); FINCHAM, Stephen, Coggeshall, Colchester, Essex CO6 1NS (GB); ALBERT, Amos, 71229 Leonberg (DE)
(86) Internationale Anmeldenummer: PCT/EP2011/064745
(87) Internationale Veröffentlichungsnummer: WO 2012/045524

(56) Entgegenhaltungen:
- EP-A2- 1 760 564
- WO-A2-2010/074644
- CN-Y- 201 210 314
- CN-Y- 201 426 049
- DE-A1-102009 001 900
- DE-U1- 29 824 813
- KR-A- 20100 044 154
- KR-B1- 100 628 054
- US-A- 5 324 948
- US-A- 5 440 216
- US-A1- 2008 183 349

## Beschreibung

Die Erfindung betrifft ein Verfahren und eine Ladestation zum elektrischen Aufladen eines elektrischen Energiespeichers. Die Erfindung betrifft ferner einen elektrischen Energiespeicher und eine Mobilvorrichtung.

### Stand der Technik

Autonom selbstfahrende Geräte wie beispielsweise ein autonomer Rasenmäher sind bekannt. Solche autonomen selbstfahrenden Geräte werden in der Regel elektrisch betrieben. Die Energie wird insbesondere mittels eines Akkumulators des autonomen Geräts bereitgestellt, wobei der Akkumulator periodisch an einer Ladestation, welche auch als eine Basisstation bezeichnet werden kann, wieder aufgeladen werden muss. Dazu fährt das autonome Gerät die Basisstation bzw. Ladestation derart an, dass es elektrisch am Ladeanschluss der Ladestation angedockt ist. Aus Sicherheitsgründen liegt an den entsprechenden Ladekontakten der Basisstation nicht die volle Ladespannung an, wenn sich das autonome Gerät nicht in der Basisstation befindet bzw. an der Basisstation angedockt ist. Daher ist das Erkennen eines sicheren elektrischen Andockens des autonomen Gerätes an der Ladestation eine wichtige Voraussetzung, um die volle Ladespannung auf die Ladekontakte zu schalten.

In der Regel werden Lithium-Ionen-Akkumulatoren als elektrischer Energiespeicher verwendet. Bei solchen Lithium-Ionen-Akkumulatoren muss insbesondere ein Ladevorgang sehr genau überwacht werden, da sich durch ein unsachgemäßes Laden ein erhöhtes Brandrisiko ergeben kann. Um ein sachgemäßes Laden sicherzustellen, wird der Ladevorgang des Akkumulators (Akkus) eines autonomen Gerätes insbesondere mittels eines Controllers auf dem Gerät selbst gesteuert und überwacht. In diesem Fall muss vor Beginn des Ladevorgangs nicht nur sichergestellt werden, dass das autonome Gerät sicher an der Ladestation angedockt ist, sondern auch dass der für die Ladeüberwachung zuständige Controller ordnungsgemäß funktioniert.

Verfahren für eine passive Detektion eines angedockten autonomen Gerätes durch eine Ladestation sind bekannt.

Beispielsweise wird in der Patentschrift EP 1 706 797 B1 ein Erfassen eines Andockvorgangs eines autonomen Gerätes an einer Ladestation durch Detektion eines Widerstandsnetzwerkes auf dem autonomen Gerät beschrieben.

In der Patentschrift EP 1 721 279 B1 wird ein Andockvorgang eines autonomen Gerätes mittels einer Detektion eines vom autonomen Gerät bereitgestellten Spannungspegels offenbart.

Die Offenlegungsschrift EP 1 760 564 A2 zeigt ein System und ein Verfahren für eine Rückkehr eines Reinigungsroboters zu einer Ladestation.

Die Offenlegungsschrift US 2008/0183349 A1 zeigt ein Verfahren für eine Kommunikation zwischen einer Ladestation und einem Roboter.

Die Gebrauchsmusterschrift DE 298 24 813 U1 zeigt ein Ankopplungssystem für ein selbstfahrendes Arbeitsgerät.

Die Patentschrift US 5,440,216 zeigt einen autonom fahrenden Reinigungsroboter, der zu einer automatischen Ladestation fahren kann.

Die Patentschrift US 5,324,948 zeigt eine Vorrichtung zur Durchführung von radiologischen Untersuchungen.

Die Offenlegungsschrift WO 2010/074644 A2 zeigt ein System zum Laden von Elektrofahrzeugen.

Die Offenlegungsschrift DE 10 2009 001 900 A1 zeigt ein Verfahren und ein System zur Arbeitsbereichserkennung eines mobilen Arbeitsgerätes.

Nachteilig an den bekannten Detektionsverfahren ist aber, dass nicht sichergestellt werden kann, dass der Controller, welcher den Ladevorgang überwacht und steuert, ordnungsgemäß funktioniert.

### Offenbarung der Erfindung

Die der Erfindung zugrunde liegende Aufgabe kann daher darin gesehen werden, ein Verfahren und eine Ladestation zum elektrischen Aufladen eines elektrischen Energiespeichers anzugeben, welche die bekannten Nachteile überwinden und eine sichere elektrische Ankopplung des elektrischen Energiespeichers an der Ladestation sicherstellen, um ein sicheres Laden des Energiespeichers zu ermöglichen.

Die der Erfindung zu Grunde liegende Aufgabe kann auch darin gesehen werden, einen elektrischen Energiespeicher zu schaffen, welcher sicher an einer Ladestation angedockt werden kann, um ein sicheres Laden des Energiespeichers zu ermöglichen.

Weiterhin kann die der Erfindung zu Grunde liegende Aufgabe darin gesehen werden, eine Mobilvorrichtung mit einem elektrischen Energiespeicher anzugeben, wobei eine sichere elektrische Ankopplung der Mobilvorrichtung an einer Ladestation sichergestellt ist, um ein sicheres Laden des elektrischen Energiespeichers zu ermöglichen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Die Erfindung umfasst den Gedanken, ein Verfahren zum elektrischen Aufladen eines elektrischen Energiespeichers mittels einer Ladestation zur Verfügung zu stellen. Bei dem elektrischen Energiespeicher kann es sich vorzugsweise um einen Akkumulator, welcher als ein Akku bezeichnet werden kann, handeln. Insbesondere kann es sich bei dem elektrischen Energiespeicher um einen Lithium-Ionen-Akku handeln. Der elektrische Energiespeicher umfasst vorzugsweise eine Energiespeicherandockvorrichtung zum Andocken an eine Ladeandockvorrichtung einer Ladestation. Beispielsweise kann die Energiespeicherandockvorrichtung zwei Ladekontakte umfassen. Insbesondere ist ein Ladekontakt mit einem Sendeschaltkreis verbunden, wobei der andere Ladekontakt mit einem Empfangsschaltkreis verbunden ist. Nach einer Ausführungsform umfasst die Ladeandockvorrichtung des elektrischen Energiespeichers auch zwei Ladekontakte, wobei vorzugsweise vorgesehen sein kann, dass ein Ladekontakt mit einem Sendeschaltkreis verbunden ist und der andere Ladekontakt mit einem Empfangsschaltkreis verbunden ist. Ein Sendeschaltkreis kann allgemein auch als ein TX-Schaltkreis und ein Empfangsschaltkreis kann allgemein auch als ein RX-Schaltkreis bezeichnet werden. Der entsprechende Ladekontakt kann insofern allgemein auch als TX-Ladekontakt und allgemein als ein RX-Ladekontakt bezeichnet werden.

In einem ersten Schritt wird ein elektrisches Andocken des elektrischen Energiespeichers an der Ladestation erfasst. Erfindungsgemäß führt die Ladestation dem angedockten Energiespeicher eine elektrische Ladeenergie erst dann zu, wenn erfasst wird, dass zwischen der Ladestation und dem angedockten Energiespeicher Kommunikationssignale ausgetauscht werden. Da ein Austauschen von Kommunikationssignalen zwischen der Ladestation und dem Energiespeicher insbesondere erst dann möglich ist, wenn der Energiespeicher sicher an der Ladestation angedockt ist, wird dadurch sichergestellt, dass die aufgrund der Andockung gebildete sichere elektrische Ankopplung des Energiespeichers an der Ladestation ausreichend ist, um ein sicheres Laden des Energiespeichers zu ermöglichen. Der elektrische Energiespeicher kann insofern auf seine Ladeandockvorrichtung eine Ladespannung aufschalten. Solange der elektrische Energiespeicher nicht angedockt ist, wird auch keine volle Ladespannung auf den Ladekontakten geschaltet.

Wenn zwischen der Ladestation und dem angedockten Energiespeicher keine Kommunikationssignale ausgetauscht werden, ist dies in der Regel ein Zeichen dafür, dass der elektrische Energiespeicher nicht mehr ordnungsgemäß funktioniert. In diesem Fall würde eine Ladespannung zu einem unsachgemäßen Laden des Energiespeichers führen. Da aber erfindungsgemäß dem elektrischen Energiespeicher erst dann eine Ladeenergie zugeführt wird, wenn ausgetauschte Kommunikationssignale erfasst werden, was ein Zeichen dafür ist, dass sämtliche System ordnungsgemäß funktionieren, wird ein unsachgemäßer Ladevorgang mit einem damit möglicherweise einhergehenden Betriebs- bzw. Brandrisiko in vorteilhafter Weise vermieden. Wenn an der Ladestation kein elektrischer Energiespeicher bzw. Mobilvorrichtung angedockt ist, so liegt entweder gar keine Spannung an, die Ladekontakte sind insofern spannungsfrei, oder es liegt allenfalls eine geringe ungefährliche Spannung an.

Die Erfindung umfasst ferner den Gedanken, eine Ladestation zum elektrischen Aufladen eines elektrischen Energiespeichers bereitzustellen. Die Ladestation umfasst eine Ladeandockvorrichtung zum Andocken des elektrischen Energiespeichers. Ferner ist ein Detektor zum Detektieren des angedockten elektrischen Energiespeichers gebildet. Die Ladestation umfasst ferner eine Kontrolleinheit, welche ausgebildet ist, im Fall eines detektierten angedockten Energiespeichers, die Ladeandockvorrichtung mit einer elektrischen Energie zu beaufschlagen. Vorzugsweise ist die Kontrolleinheit als ein Controller, vorzugsweise als ein Mikrocontroller ausgebildet. Beispielsweise kann die Ladestation eine elektrische Energiequelle umfassen, welche über die Kontrolleinheit mit der Ladeandockvorrichtung zum Zuführen von elektrischer Ladeenergie zu dem angedockten elektrischen Energiespeicher elektrisch verbunden ist. Erfindungsgemäß weist der Detektor einen Magnetsensor und/oder eine Kommunikationsschnittstelle zum Austauschen von Kommunikationssignalen zwischen der Ladestation und dem angedockten Energiespeicher auf. Bei der Schnittstelle kann es sich insbesondere um eine E/A-232 Schnittstelle handeln. Es wird angemerkt, dass sich die Erfindung nicht nur auf das RS232-Übertragungsprotokoll beschränkt, sondern es kann allgemein jedes Übertragungsprotokoll, insbesondere bidirektionales Übertragungsprotokoll, vorgesehen sein. Insbesondere in dem Fall, wenn die Ladeandockvorrichtung zwei Ladekontakte hat, kann ein Austausch von Kommunikationssignalen zwischen der Ladestation und dem angedockten elektrischen Energiespeicher über die zwei Ladekontakte stattfinden. Beispielsweise kann die Kommunikation zwischen der Ladestation und dem angedockten Energiespeicher mittels Modulation der Ladespannung, insbesondere der an den Ladekontakten anliegenden Ladespannungen, erfolgen. Eine solche Modulation kann auch als eine PowerLine-Kommunikation bezeichnet werden. Diese Ausführungsform bietet insbesondere den Vorteil, dass über bereits vorhandene Ladekontakte eine Kommunikation ermöglicht ist. Insofern müssen nicht mehr zusätzliche Kommunikationsschnittstellen geschaffen werden. Dadurch können insbesondere Kosten gesenkt werden. Darüber hinaus ist auch ein besonders kompakter Aufbau ermöglicht.

Ferner umfasst die Erfindung den Gedanken, einen elektrischen Energiespeicher bereitzustellen, welcher eine Energiespeicherandockvorrichtung zum Andocken an eine Ladeandockvorrichtung einer Ladestation umfasst. Beispielsweise kann die Energiespeicherandockvorrichtung einen oder mehrer Ladekontakte, insbesondere zwei Ladekontakte, aufweisen. Vorzugsweise ist ein Ladekontakt mit einem RX-Schaltkreis und der andere Ladekontakt mit einem TX-Schaltkreis verbunden. Die entsprechenden Ladekontakte können insofern auch als ein RX-Ladekontakt und als ein TX-Ladekontakt bezeichnet werden. Ferner weist der elektrische Energiespeicher einen Magneten und/oder eine Energiespeicherkommunikationsschnittstelle zum Austauschen von Kommunikationssignalen zwischen der Ladestation und dem angedockten elektrischen Energiespeicher auf. Vorzugsweise umfasst der elektrische Energiespeicher eine Ladekontrolleinheit, welche insbesondere einen Ladevorgang überwachen und/oder steuern kann. Insbesondere kann die Ladekontrolleinheit als ein Controller, insbesondere als ein Mikrocontroller, ausgebildet sein. Vorzugsweise können die Energiespeicherkommunikationsschnittstelle und die Energiespeicherandockvorrichtung integral gebildet sein. D.h., dass über die Energiespeicherandockvorrichtung ein Austausch von Kommunikationssignalen mit der Ladestation möglich ist. Vorzugsweise werden Kommunikationssignale über den Ladekontakt oder über die Ladekontakte der Energiespeicherandockvorrichtung ausgetauscht. Auch diese Ausführungsform ermöglicht einen besonders kompakten Aufbau, da keine zusätzlichen Kommunikationsschnittstellen benötigt werden. Insbesondere wenn der elektrische Energiespeicher einen Magneten aufweist, kann eine Ladestation mit einem Detektor, welcher beispielsweise einen Magnetsensor umfassen kann, das Andocken des elektrischen Energiespeichers an der Ladestation magnetisch erfassen. Da einen Magneten ein entsprechendes magnetisches Feld umgibt, sendet der Magnet sozusagen magnetische Kommunikationssignale an die Ladestation aus.

Ferner umfasst die Erfindung den Gedanken, eine Mobilvorrichtung umfassend einen elektrischen Energiespeicher bereitzustellen. Die Mobilvorrichtung weist ferner eine Andockvorrichtung zum Andocken des elektrischen Energiespeichers an einer Ladestation auf. Darüber hinaus weist die Mobilvorrichtung eine Kontrolleinheit auf, welche ausgebildet ist, Kommunikationssignale über die Andockvorrichtung auszusenden und zu empfangen. Vorzugsweise umfasst die Andockvorrichtung einen oder mehrere, insbesondere zwei, Ladekontakte, über welche der elektrische Energiespeicher mit elektrischer Ladeenergie versorgt werden kann. Vorzugsweise ist ein Ladekontakt mit einem RX-Schaltkreis und der andere Ladekontakt mit einem TX-Schaltkreis verbunden. Die entsprechenden Ladekontakte können insofern auch als ein RX-Ladekontakt und als ein TX-Ladekontakt bezeichnet werden. Insbesondere handelt es sich bei der Andockvorrichtung um die Energiespeicherandockvorrichtung des oben beschriebenen elektrischen Energiespeichers. Nach einer Ausführungsform kann vorgesehen sein, dass die Mobilvorrichtung einen Magneten umfasst, so dass eine Ladestation aufweisend einen Magnetsensor das Andocken der Mobilvorrichtung an der Ladestation magnetisch sicher erfassen kann. Nach einer weiteren Ausführungsform kann es sich bei der Mobilvorrichtung um eine halbautonome oder eine autonome Mobilvorrichtung handeln. Eine Mobilvorrichtung kann auch als ein Arbeitsgerät, insbesondere als ein selbstfahrendes Arbeitsgerät bezeichnet werden. Vorzugsweise handelt es sich bei der Mobilvorrichtung um einen Rasenmäher, insbesondere einen autonomen Rasenmäher, oder um einen Gartenassistenten, insbesondere um einen autonomen Gartenassistenten. Nach einer anderen Ausführungsformen kann die Mobilvorrichtung auch ein Flurförderzeug sein oder ein elektrisch betriebenes Kraftfahrzeug zur Personen- und/oder Lastenbeförderung. Vorzugsweise handelt es sich bei einer Mobilvorrichtung um ein Arbeitsgerät.

Wenn im Folgenden eine Kommunikation zwischen der Ladestation und dem elektrischen Energiespeicher beschrieben wird, so soll dadurch auch gleichzeitig eine entsprechende Kommunikation zwischen der Ladestation und der Mobilvorrichtung umfasst sein und umgekehrt.

Nach einer Ausführungsform kommunizieren die Ladestation und die Mobilvorrichtung bzw. der elektrische Energiespeicher halbduplex und/oder vollduplex. Vorzugsweise werden die Kommunikationssignale über einen oder mehrere, insbesondere zwei Ladekontakte, vorzugsweise durch Modulation der an den Ladekontakten anliegenden Spannung, insbesondere Ladespannung, ausgetauscht. Ladekontakte können auch als Pins bezeichnet werden. Vorzugsweise wird für den Austausch der Kommunikationssignale eine E/A-232 Schnittstelle verwendet. Eine Elektronikschaltung für eine solche Schnittstelle ist in der Regel bereits an vielen Ladestationen bzw. Mobilvorrichtungen vorhanden, so dass eine einfache Datenschnittstelle geschaffen ist, ohne dass hierfür aufwendige Umbaumaßnahmen erforderlich sind. Die Vollduplexkommunikation kann auch als eine bidirektionale Kommunikation bezeichnet werden.

Nach einer Ausführungsform umfassen die ausgetauschten Kommunikationssignale ein Identifikationssignal zum Identifizieren der Ladestation und/oder des Energiespeichers. Beispielsweise können auch mehrere Identifikationssignale vorgesehen sein. Diese Ausführungsform bietet insbesondere den Vorteil, dass nur bestimmte Energiespeicher bzw. Mobilvorrichtungen mittels der Ladestation geladen werden können. Ein nicht zulässiger Energiespeicher oder eine nicht zulässige Mobilvorrichtung würden nicht von der Ladestation akzeptiert werden. Es kann dadurch auch umgekehrt erreicht werden, dass sich ein Energiespeicher bzw. eine Mobilvorrichtung nur mittels einer bestimmten Ladestation betreiben lässt. Somit kann in vorteilhafter Weise ein Diebstahlschutz der Mobilvorrichtung bzw. des Energiespeichers erreicht werden, da diese bzw. dieser nur mit einer bestimmten Ladestation geladen werden kann. Ohne die passende Ladestation ist die Mobilvorrichtung bzw. das Arbeitsgerät nutzlos.

Gemäß einer Ausführungsform führt die Ladestation dem angedockten Energiespeicher eine elektrische Notladeenergie zu, wenn ein Ausbleiben von ausgetauschten Kommunikationssignalen zwischen der Ladestation und dem angedockten Energiespeicher erfasst wird. Wenn keine Kommunikationssignale zwischen der Ladestation und dem angedockten Energiespeicher ausgetauscht werden, ist dies ein Zeichen dafür, dass der elektrische Energiespeicher abgeschaltet ist, insbesondere aufgrund eines Tiefentladeschutzes. Eine Mobilvorrichtung mit einem solchen elektrischen Energiespeicher wäre insofern nicht in Betrieb. Eine solche Mobilvorrichtung kann auch als eine elektrisch tote Mobilvorrichtung bezeichnet werden. Da aber erfindungsgemäß erst dann eine elektrische Ladeenergie dem elektrischen Energiespeicher zugeführt wird, wenn zwischen der Ladestation und dem angedockten Energiespeicher Kommunikationssignale ausgetauscht werden, würde im Fall einer elektrisch toten Mobilvorrichtung oder bzw. eines abgeschalteten elektrischen Energiespeichers eine solche Zuführung von elektrischer Ladeenergie nie statt finden. Da aber gemäß dieser beispielhaften Ausführungsform ein Ausbleiben von ausgetauschten Kommunikationssignalen erfasst wird und daraufhin dem angedockten Energiespeicher eine elektrische Notladeenergie zugeführt wird, wird dadurch der elektrische Energiespeicher soweit mit elektrischer Energie versorgt, dass der elektrische Energiespeicher bzw. die Mobilvorrichtung, insbesondere gegebenenfalls nach ausreichend langer Ladedauer mit Notladeenergie, mit der Ladestation Kommunikationssignale austauschen kann. Dieses Austauschen wird dann wiederum erfasst, woraufhin die Ladestation folglich auf ihre Ladeandockvorrichtung die volle Ladespannung schaltet, so dass der elektrische Energiespeicher beladen werden kann. Eine eventuelle Ladekontrolleinheit hat auf Grund der zugeführten Notladeenergie auch ausreichend Energie, um einen ordnungsgemäßen sicheren Ladevorgang steuern und/oder überwachen zu können. Die dem Akku wie oben beschrieben zugeführte Notladeenergie ist insbesondere dergestalt, dass sie vom Spannungspegel und/oder von der Stromstärke her derart begrenzt ist, dass sie zu keinem Zeitpunkt eine Gefahr für Lebewesen und/oder den zu ladenden Akku darstellt.

Nach einer Ausführungsform umfasst das Erfassen des Andockens des elektrischen Energiespeichers ein Beaufschlagen des elektrischen Energiespeichers mit einer elektrischen Größe, beispielsweise einem Strom und/oder einer Spannung. Vorzugsweise wird ein Kondensator auf der Lade- bzw. Überwachungsschaltung des elektrischen Energiespeichers geladen und ein zeitlicher Verlauf einer Kondensatorspannung gemessen. Beispielsweise kann auch vorgesehen sein, dass ein Kondensator der Mobilvorrichtung geladen wird. Insbesondere kann die Ladestation Stromimpulse geringerer und damit sicherer Größen an die Ladekontakte senden. Beim Andocken des elektrischen Energiespeichers bzw. der Mobilvorrichtung laden diese Stromimpulse einen Kondensator in einer Schaltung bzw. einem Schaltkreis der Mobilvorrichtung auf. In den Pausen zwischen den Stromimpulsen wird dann eine Spannung an den Ladekontakten gemessen. Wenn kein elektrischer Energiespeicher bzw. keine Mobilvorrichtung an der Ladestation angedockt ist, ist auch keine Spannung an den Ladekontakten detektierbar. Wenn aber ein elektrischer Energiespeicher bzw. eine Mobilvorrichtung an der Ladestation angedockt ist, ist eine zeitlich abklingende Spannung messbar, die charakteristisch für die Entladekurve des Kondensators einer bestimmten Dimensionierung, d.h. insbesondere Kapazität, ist. Das Vorhandensein des Kondensators in dem elektrischen Energiespeicher bzw. in der Mobilvorrichtung ist auch bei einer elektrisch toten Mobilvorrichtung bzw. bei einem ausgeschalteten Energiespeicher detektierbar, so dass sich über die Messung der Kondensatorspannung auch ein sicheres Andocken detektieren lässt.

Gemäß einer weiteren Ausführungsform wird beim Andocken ein mittels der Ladestation mit elektrisch Energie versorgter elektrischer Schwingkreis elektrisch geschlossen. Ein solcher elektrischer Schwingkreis kann insbesondere auch als ein Oszillatorkreis bezeichnet werden. Aufgrund des Andockens des elektrischen Energiespeichers bzw. der Arbeitsvorrichtung an der Ladestation wird der Schwingkreis komplettiert bzw. geschlossen, der in Folge elektrische Schwingungen erzeugt, was auch als ein Loslaufen des Oszillatorkreises bezeichnet werden kann. Solange der elektrische Energiespeicher bzw. die Mobilvorrichtung noch nicht an der Ladestation angedockt ist, ist die Schwingkreisschaltung in der Ladestation offen und insofern nicht komplett, kann also auch nicht funktionieren. In dem elektrischen Energiespeicher bzw. in der Mobilvorrichtung können ein passives Bauelement oder mehrer passive Bauelemente, beispielsweise ein Kondensator und/oder eine Spule, angeordnet sein, die beim Andocken den Schwingkreis komplettieren. Da der Schwingkreis von der Ladestation elektrisch versorgt wird, kann der komplettierte Schwingkreis auch bei einer elektrisch toten Mobilvorrichtung bzw. bei einem abgeschalteten Energiespeicher funktionieren, so dass damit auch ein sicheres Andocken erkannt werden kann.

Die Erfindung wird im Folgenden anhand von bevorzugten Ausführungsbeispielen unter Bezugnahme auf Figuren näher erläutert. Hierbei zeigen
- Fig. 1: eine Ladestation,
- Fig. 2: einen elektrischen Energiespeicher,
- Fig. 3: eine Mobilvorrichtung,
- Fig. 4: ein Ablaufdiagramm eines Verfahrens zum elektrischen Aufladen eines elektrischen Energiespeichers,
- Fig. 5: eine Ladestation und eine Mobilvorrichtung,
- Fig. 6a, 6b, 6c: ein beispielhafter Ablauf eines Dockingprozesses,
- Fig. 7: ein zeitlicher Ablauf der Kommunikation und
- Fig. 8: ein weiterer zeitlicher Ablauf der Kommunikation.

Im Folgenden werden für die gleichen Elemente die gleichen Bezugszeichen verwendet.

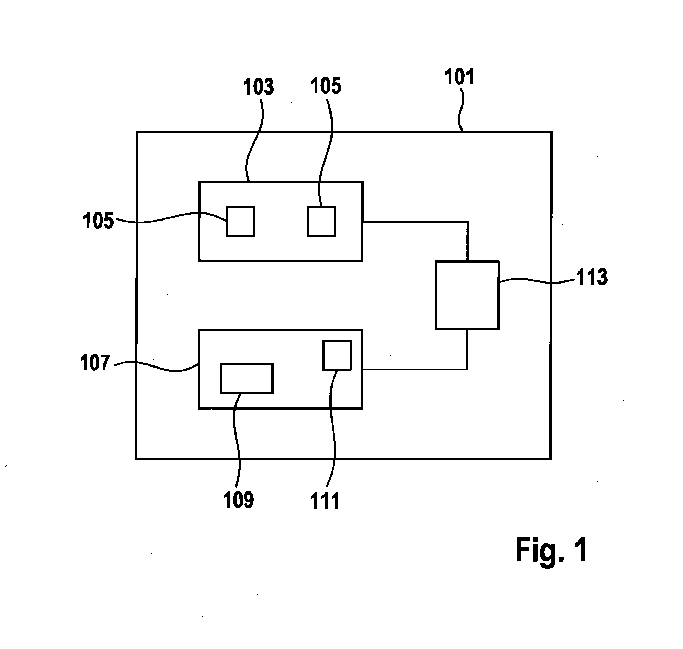

Fig. 1 zeigt eine Ladestation 101 zum elektrischen Aufladen eines elektrischen Energiespeichers (nicht gezeigt). Die Ladestation 101 kann auch als eine Basisstation (BS) bezeichnet werden. Die Ladestation 101 umfasst eine Ladeandockvorrichtung 103, welche ausgebildet ist, den elektrischen Energiespeicher derart aufzunehmen, dass dieser an der Ladestation angedockt ist. Die Ladeandockvorrichtung 103 weist zwei Ladekontakte 105 auf, welche mit einer Ladespannung beaufschlagt werden können. Die. Ladestation 101 weist ferner einen Detektor 107 zum Detektieren des angedockten elektrischen Energiespeichers auf. Der Detektor 107 weist einen Magnetsensor 109 und eine Kommunikationsschnittstelle 111 zum Austauschen von Kommunikationssignalen zwischen der Ladestation und dem angedockten elektrischen Energiespeicher auf. Ferner ist eine Kontrolleinheit 113 vorgesehen, welche ausgebildet ist, im Fall eines detektierten angedockten Energiespeichers, die Ladeandockvorrichtung 103 mit einer elektrischen Energie zu beaufschlagen. D.h. insbesondere, dass, wenn der elektrische Energiespeicher an der Ladeandockvorrichtung 103 angedockt ist und dieses Andocken mittels des Detektors 107 erfasst wird, die Kontrolleinheit 113 die beiden Ladekontakte 105 mit einer Ladespannung beaufschlagt, so dass der elektrische Energiespeicher elektrisch aufgeladen werden kann. Wenn kein elektrischer Energiespeicher an der Ladestation 101 angedockt ist, so liegt auch keine Ladespannung an den Ladekontakten 105 an. In einer anderen nicht gezeigten Ausführungsform kann der Detektor nur einen Magnetsensor 109 oder nur eine Kommunikationsschnittstelle 111 aufweisen. Vorzugsweise handelt es sich bei der Kommunikationsschnittstelle 111 um eine E/A-232 Schnittstelle. Insbesondere kann die Kommunikationsschnittstelle 111 mit den beiden Ladekontakten 105 integral gebildet sein. D.h. insbesondere, dass eine Kommunikation zwischen dem elektrischen Energiespeicher und der Ladestation 101 über die beiden Ladekontakte 105 stattfindet, beispielsweise durch Modulation einer Spannung. Diese Art der Kommunikation kann auch als eine PowerLine-Kommunikation bezeichnet werden. Vorzugsweise kommunizieren die Ladestation 101 und der elektrische Energiespeicher halbduplex über die zwei Ladekontakte 105. Es kann aber auch eine bidirektionale Kommunikation, d.h. vollduplex, vorgesehen sein. Da erfindungsgemäß erst die volle Ladespannung anliegt, wenn die Ladestation 101 und der elektrische Energiespeicher sicher miteinander gekoppelt sind, wird hier in vorteilhafter Weise eine mögliche Verletzungsgefahr auf Grund von hohen Ladespannungen und Ladeströmen verringert. Wenn kein elektrischer Energiespeicher an der Ladestation 101 angedockt ist, liegt entweder gar keine Spannung an den Ladekontakten 105 an oder es liegt eine ungefährliche Spannung an.

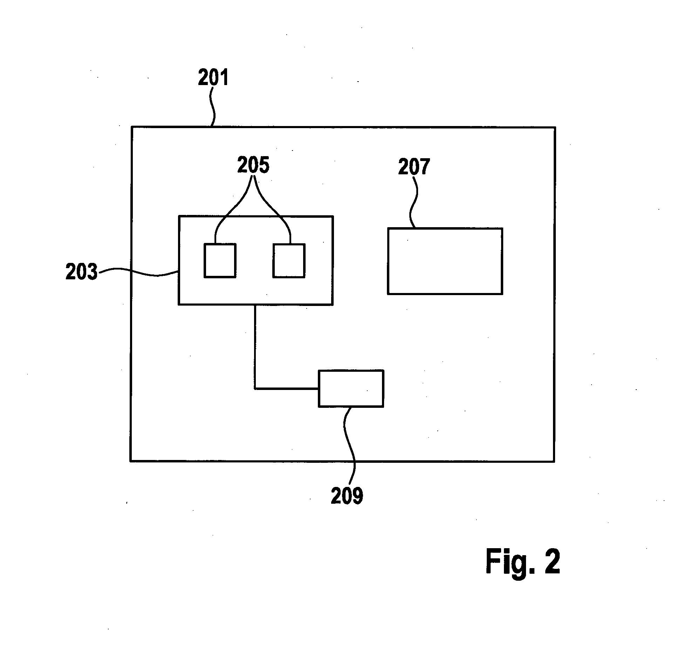

Fig. 2 zeigt einen elektrischen Energiespeicher 201, welcher beispielsweise als ein Lithium-Ionen-Akkumulator ausgebildet sein kann. Der elektrische Energiespeicher 201 umfasst eine Energiespeicherandockvorrichtung 203 mit zwei Ladekontakten 205. Insbesondere können die zwei Ladekontakte 205 ausgebildet sein, an die Ladekontakte 105 der Ladeandockvorrichtung 103 der Ladestation 101 aus Fig. 1 anzudocken. Ferner weist der elektrische Energiespeicher 201 einen Magneten 207 auf. Wenn beispielsweise der elektrische Energiespeicher 201 an die Ladestation 101 aus Fig.1 angedockt wird, so erfasst der Magnetsensor 109 den Magneten 207 des elektrischen Energiespeichers 201, so dass darüber ein sicheres Andocken des elektrischen Energiespeichers 201 an der Ladestation 101 erfasst werden kann. Da dem Magneten 207 ein magnetisches Feld (nicht gezeigt) umgibt, werden insofern magnetische Signale von dem elektrischen Energiespeicher 201 an die Ladestation 101 gesendet. Diese magnetischen Signale können auch als Kommunikationssignale, insbesondere als magnetische Kommunikationssignale bezeichnet werden. Wenn der Magnetsensor 109 diese magnetischen Kommunikationssignale, welche mittels des Magneten 207 ausgesandt werden, detektiert, so wird dem elektrischen Energiespeicher 201 eine elektrische Ladeenergie zugeführt. Des Weiteren weist der elektrische Energiespeicher 201 auch eine Ladekontrolleinheit 209 auf, welche insbesondere ausgebildet ist, einen Ladevorgang des elektrischen Energiespeichers 201 zu steuern und/oder zu überwachen.

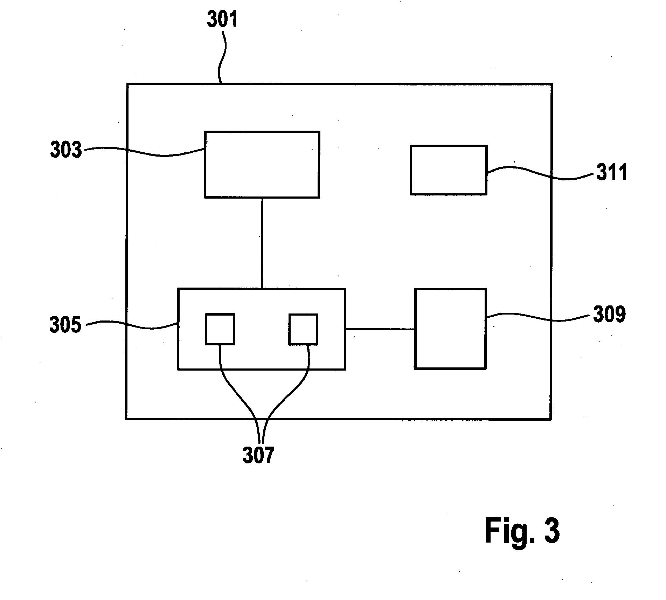

Fig. 3 zeigt eine Mobilvorrichtung 301 umfassend einen elektrischen Energiespeicher 303. Der elektrische Energiespeicher 303 kann beispielsweise als ein Lithium-Ionen-Akku ausgebildet sein. Die Mobilvorrichtung 301 weist ferner eine Andockvorrichtung mit zwei Ladekontakten 307 auf. Die Ladekontakte 307 sind insbesondere derart ausgebildet, um über die Ladeköntakte 105 der Ladeandockvorrichtung 103 der Ladestation 101 an die Ladestation 101 anzudocken, so dass die Ladestation 101 dem elektrischen Energiespeicher 303 über die Ladekontakte 307 eine elektrische Ladeenergie, beispielsweise eine elektrische Ladespannung, zuführen kann, so dass der elektrische Energiespeicher 303 aufgeladen wird. Um den Ladevorgang des elektrischen Energiespeichers 303 zu überwachen ist ferner eine Kontrolleinheit 309 vorgesehen. Die Kontrolleinheit 309 ist weiterhin ausgebildet, Kommunikationssignale über die Andockvorrichtung 305 auszusenden und zu empfangen. Insbesondere kann die Kontrolleinheit 309 über die beiden Ladekontakte 307 der Andockvorrichtung 305 Kommunikationssignale aussenden bzw. empfangen. Darüber hinaus weist die Mobilvorrichtung 301 einen Magneten 311 auf, so dass die Ladestation 101 aus Fig. 1 mittels des Magnetsensors 109 diesen Magneten 311 detektieren kann, so dass darüber ein sicheres Andocken der Mobilvorrichtung 301 an der Ladestation 101 erfasst werden kann. Die Mobilvorrichtung 301 kann beispielsweise als ein mobiler Rasenmäher ausgebildet sein. In weiteren nicht gezeigten Ausführungsbeispielen kann die Mobilvorrichtung 301 auch als ein autonomer Gartenassistent, als ein autonomes Gerät, als ein Flurförderzeug, als ein elektrisch betriebenes Kraftfahrzeug zur Personen- und/oder Lastenbeförderung ausgebildet sein. Allgemein kann die Mobilvorrichtung 301 auch als ein Arbeitsgerät (AG) bezeichnet werden, insbesondere als ein halbautonomes oder autonomes Arbeitsgerät. In einer weiteren nicht gezeigten Ausführungsform kann es sich bei dem elektrischen Energiespeicher 303 der Mobilvorrichtung 301 auch um den in Fig. 2 gezeigten elektrischen Energiespeicher 201 handeln. In diesem Fall kann dann beispielsweise auf die Andockvorrichtung 305 und/oder beispielsweise auf den Magneten 311 und/oder insbesondere auch auf die Kontrolleinheit 309 verzichtet werden, wenn sichergestellt ist, dass die Ladekontrolleinheit 209 auch ausgebildet ist, Kommunikationssignale über die beiden Ladekontakte 205 der Energiespeicherandockvorrichtung 203 auszusenden bzw. zu empfangen.

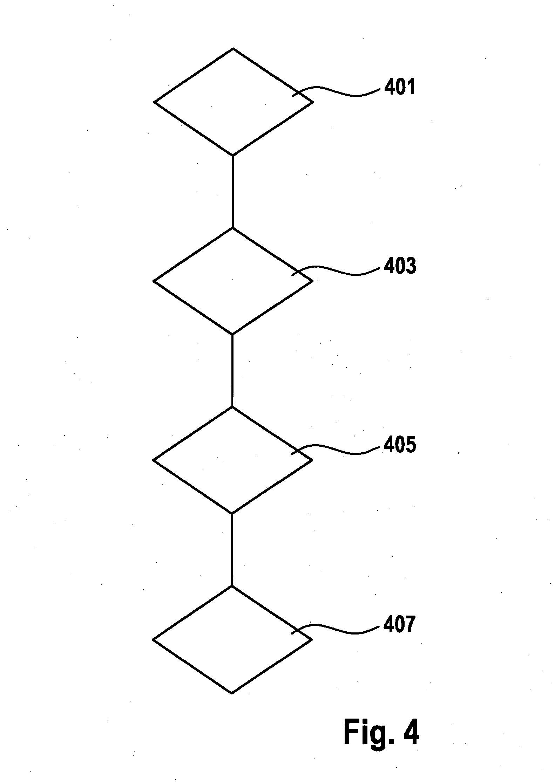

Fig. 4 zeigt ein schematisches Ablaufdiagramm einer bevorzugten Ausführungsform des Verfahrens zum elektrischen Aufladen eines elektrischen Energiespeichers mittels einer Ladestation. In einem ersten Schritt 401 wird ein elektrisches Andocken des elektrischen Energiespeichers an der Ladestation erfasst. Es findet im Schritt 403 ein Austausch von Kommunikationssignalen zwischen der Ladestation und dem angedockten Energiespeicher statt. Wenn dieser Austausch in einem Schritt 405 erfasst wird, so wird in einem Schritt 407elektrische Ladeenergie dem elektrischen Energiespeicher mittels der Ladestation zugeführt. Somit wird in vorteilhafter Weise sichergestellt, dass die Ladestation an ihre Ladekontakte erst dann eine Ladespannung anlegt, wenn der elektrische Energiespeicher sicher an der Ladestation angedockt ist. In einer anderen bevorzugten nicht gezeigten Ausführungsform kann auch vorgesehen sein, dass an die Ladestation eine Mobilvorrichtung mit einem elektrischen Energiespeicher andockt. Die vorgenannten Schritte 401 bis 407 gelten analog.

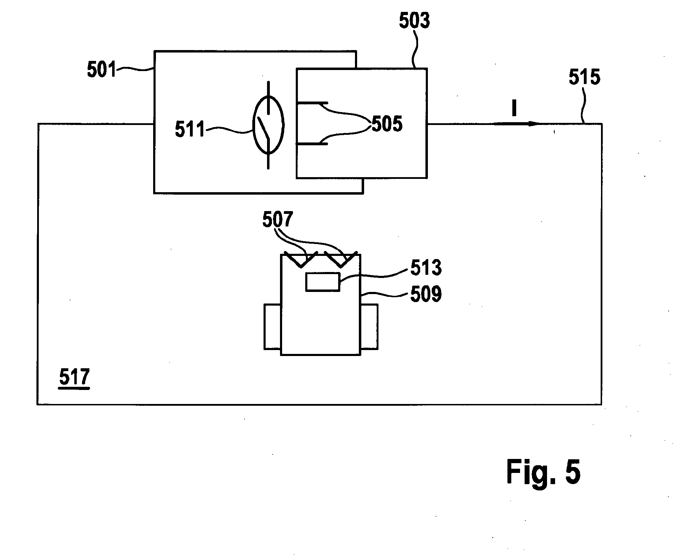

Fig. 5 zeigt eine Ladestation 501 mit einer Ladeandockvorrichtung 503. Die Ladeandockvorrichtung umfasst zwei Ladekontakte 505, welche im Folgenden auch als erste Kontakte bezeichnet werden können. Die Ladekontakte 505 sind jeweils mit einem Sende (TX) -Schaltkreis und einem Empfangs (RX) -Schaltkreis verbunden. Beide Schaltkreise sind der Übersicht halber nicht eingezeichnet. Des Weiteren sind die beiden ersten Ladekontakte 505 schaltbar mit einer Stromversorgung (nicht gezeigt) verbunden. Die beiden ersten Ladekontakte 505 sind ausgebildet, um mit Ladekontakten 507, welche im Folgenden auch als zweite Ladekontakte bezeichnet werden können, einer Mobilvorrichtung 509 anzudocken. D.h., dass die Mobilvorrichtung 509 über die zweiten Ladekontakte 507 an den ersten Ladekontakten 505 der Ladestation 501 andocken kann. Die Mobilvorrichtung 509 weist einen elektrischen Energiespeicher (nicht gezeigt) auf, welcher insbesondere Antriebsmotoren (nicht gezeigt) der Mobilvorrichtung 509 mit einer elektrischer Energie versorgt. Die Ladestation 501 weist ferner einen Magnetsensor 511 auf, welcher einen Magneten 513 der Mobilvorrichtung 509 detektieren kann, wenn die Mobilvorrichtung 509 an der Ladestation 509 angedockt ist.

Ferner ist ein Einfassungsdraht 515 vorgesehen, welcher eine Arbeitsfläche 517 begrenzt, wobei auf dem Einfassungsdraht 515 ein Stromsignal I aufgeprägt ist. Dieser Strom kann mittels der Mobilvorrichtung 509 erfasst werden, beispielsweise induktiv erfasst werden, so dass die Mobilvorrichtung 509 nicht über den Einfassungsdraht 515 hinausfährt und insofern auf der Arbeitsfläche 517 arbeitet. Auf der Arbeitsfläche 517 wird die Mobilvorrichtung 509 insbesondere autonom oder halbautonom betrieben. Beispielsweise wenn es sich bei der Mobilvorrichtung 509 um einen autonomen Rasenmäher handelt, so kann die Arbeitsfläche 517 eine Rasenfläche sein, welche mittels der Mobilvorrichtung 509 gemäht wird. Beispielsweise wenn es sich bei der Mobilvorrichtung 509 um einen autonomen oder halbautonomen Staubsauger handelt, so kann die Arbeitsfläche 517 beispielsweise ein Fußboden und/oder ein Teppich sein, welche mittels des Staubsaugers gereinigt wird.

In dem hier gezeigten Ausführungsbeispiel ist der Magnetsensor 511 als ein Magnetischer Schalter ausgebildet, welcher beim Erfassen des Magneten 513, d.h. wenn die Mobilvorrichtung 509 an der Ladestation 501 andockt, schließt, so dass die beiden Ladekontakte 505 mit einer Ladespannung beaufschlagt werden. Wenn die Mobilvorrichtung 509 nicht an der Ladestation 501 angedockt ist, so ist der magnetische Schalter 511 offen und es liegt insofern keine Ladespannung an den ersten Kontakten 505 an. Sowohl die Ladestation 501 als auch die Mobilvorrichtung 509 weisen jeweils eine Kontrolleinheit (nicht gezeigt) auf, welche jeweils derart ausgebildet ist, über die entsprechenden Ladekontakte 505 und 507 Kommunikationssignale auszusenden und zu empfangen, so dass ein Austausch von Kommunikationssignalen zwischen der Ladestation 501 und der Mobilvorrichtung 509 ermöglicht ist. Beispielsweise kann eine Modulation einer an den Ladekontakten 505 und 507 angelegten Spannung stattfinden. Insbesondere kann eine Halbduplex-Kommunikation oder eine Vollduplex-Kommunikation stattfinden. Eine Vollduplex-Kommunikation kann auch als eine bidirektionale Kommunikation zwischen der Ladestation 501 und der Mobilvorrichtung 509 bezeichnet werden. Der hier gezeigte magnetische Schalter 511 kann auch allgemein bei weiteren Ausführungsbeispielen verwendet werden und soll sich insofern nicht nur auf das in Fig. 5 gezeigte Ausführungsbeispiel beschränken.

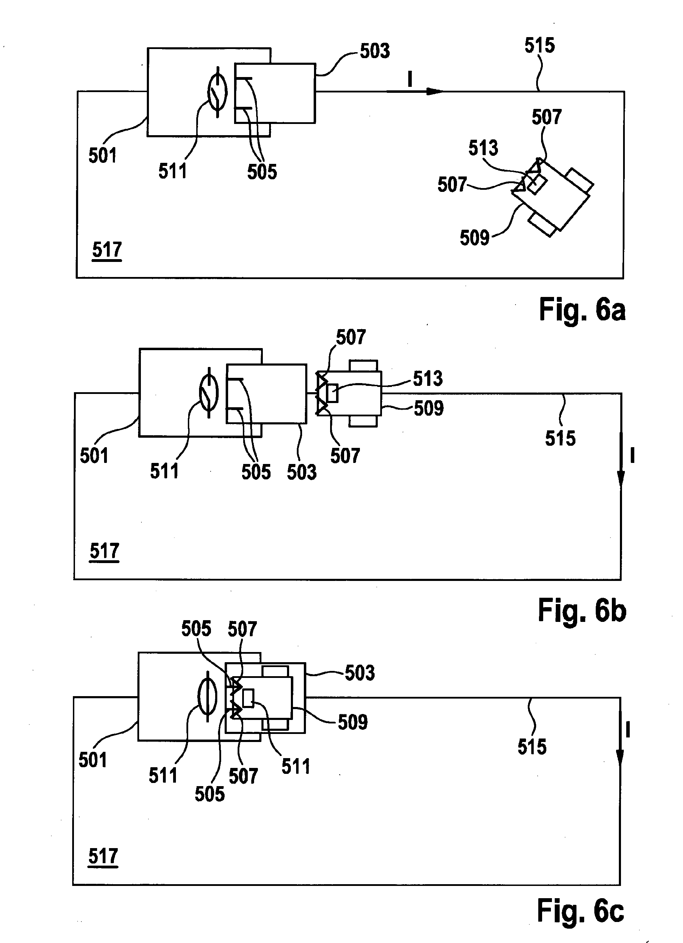

Die Fig. 6a, 6b und 6c zeigen einen beispielhaften Ablauf eines Andockprozesses der Mobilvorrichtung 509 an der Ladestation 501. Die Mobilvorrichtung 509 bearbeitet die Arbeitsfläche 517, wie in Fig. 6a gezeigt, und befindet sich in einem autonomen oder halbautonomen Betriebsmodus. Wenn beispielsweise die Mobilvorrichtung 509 feststellt, dass der elektrische Energiespeicher eine bestimmte Kapazität oder eine bestimmte Energiehalteschwelle erreicht bzw. unterschreitet, so beendet die Mobilvorrichtung 509 ihre Aufgabe und fährt in Richtung Ladestation. Beispielsweise kann auch vorgesehen sein, das die Ladestation 501 ein Rückkehrsignal an die Mobilvorrichtung 509 aussendet, woraufhin diese dann ebenfalls ihre Arbeit einstellt und in Richtung der Ladestation 501 fährt. Hierbei kann vorgesehen sein, dass die Mobilvorrichtung 509 den Einfassungsdraht 515 als einen Richtungsindikator nutzt, um sich in Richtung der Ladestation 501 zu bewegen. Insofern kann sich die Mobilvorrichtung 509 auf den Einfassungsdraht 515 ausrichten wie in Fig. 6b gezeigt. Fig. 6c zeigt nun die Mobilvorrichtung 509, wie sie an der Ladestation 501 angedockt ist. Der Magnetsensor 511 hat die Anwesenheit des Magneten 513 detektiert und schließt seinen magnetischen Schalter 511. Somit werden die ersten Ladekontakte 505 mit einer Ladespannung beaufschlagt, um den elektrischen Energiespeicher der Mobilvorrichtung 509 zu laden. So lange sich die Mobilvorrichtung 509 nicht im angedockten Zustand an der Ladestation 501 befindet, liegt auch keine Ladespannung an den ersten Ladekontakten 505 der Ladestation 501 an. Der magnetische Schalter 511 detektiert in dem Fall nicht den Magneten 513, so dass ein entsprechender Ladeschaltkreis nicht geschlossen wird. Es kann beispielsweise auch vorgesehen sein, dass der Magnet 513 den Magnetsensor 211 betätigt und damit eine sichere, niedrigere Notladeenergie freischaltet. Vorzugsweise wird die normale hohe Ladeenergie nur nach erfolgter erfolgreicher Kommunikation zwischen der Mobilvorrichtung 509 und der Ladestation 501 freigeschaltet.

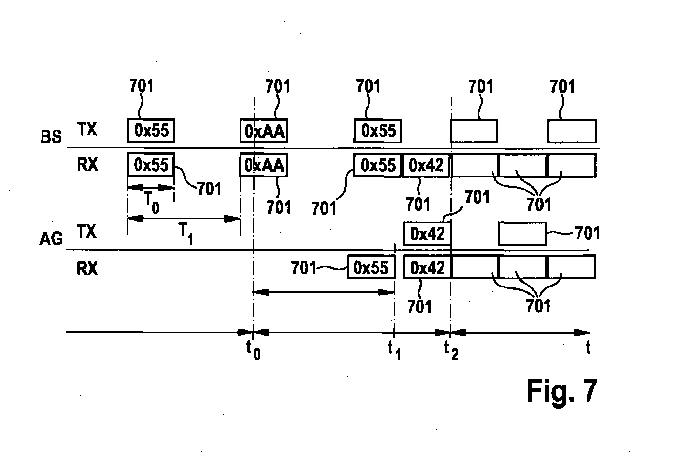

Fig. 7 zeigt einen zeitlichen Verlauf einer beispielhaften Kommunikation. Auf der x-Achse aufgetragen ist die Zeit. Weiterhin aufgetragen sind die Signale, welche von der Ladestation 501 auf ihre beiden Ladekontakte 505 ausgegeben bzw. empfangen werden. Hierbei bezeichnet BS die Ladestation 501. TX bezeichnet den ersten Ladekontakt 505, welcher mit dem Sendeschaltkreis verbunden ist. RX bezeichnet den ersten Ladekontakt 505 welcher mit dem Empfangsschaltkreis verbunden ist. AG bezeichnet entsprechend die Mobilvorrichtung 509. TX steht analog für den zweiten Ladekontakt 507, welcher mit dem Sendeschaltkreis verbunden ist. RX bezeichnet den zweiten Ladekontakt 507, welcher mit dem Empfangsschaltkreis verbunden ist. Mit dem Bezugszeichen 701 werden Datenblöcke gekennzeichnet, welche auf den jeweiligen Ladekontakten 505 und 507 ausgesandt bzw. empfangen werden. Der Datenblock 701 kann beispielsweise ein Bit sein. Die Länge eines Datenblocks 701 kann vorzugsweise eine Millisekunde betragen. Ein zeitlicher Abstand zwischen zwei Datenblöcken 701 kann beispielsweise drei Millisekunden betragen. Vorzugsweise werden 0xAA und/oder 0x55 ausgesandt und/oder empfangen.

Vor dem Zeitpunkt t₀ ist das Arbeitsgerät bzw. die Mobilvorrichtung 509 noch nicht an der Basisstation BS bzw. Ladestation 501 angedockt. In diesem Nichtandockmodus sendet die Basisstation beispielsweise alle drei Millisekunden ein Byte, insbesondere abwechselnd 0xAA und 0x55 über die TX-Schaltung bzw. den TX-Ladekontakt und empfängt gleichzeitig über die RX-Schaltung bzw. den RX-Ladekontakt das ausgesendete Byte. Das bewirkt insbesondere, dass die Basisstation detektieren kann, dass das Arbeitsgerät nicht angedockt ist, so dass an den ersten Ladekontakten 505 auch keine Ladespannung angelegt wird. Darüber hinaus findet so in vorteilhafter Weise eine Eigenüberprüfung der Basisstation statt. Das Signal kann ausgesendet und auch wieder empfangen werden. Wenn beispielsweise die Ladekontakte 505 einen Kurzschluss aufweisen würden, so wäre insbesondere ein Empfang der ausgesendet Bytes bzw. Datenblöcke 701 nicht mehr möglich. Insbesondere kann eine Baudrate von 9600 vorgesehen sein, was einer Übertragung eines Bytes von 1,05ms Länge entspricht, so dass zwischen den beiden Bytes eine ca. 1,95ms lange Pause entsteht. Während dieser Zeit ist die Basisstation über den RX-Ladekontakt 505 empfangsbereit.

Ebenso kann das Arbeitsgerät im Nichtdockingmodus über den TX-Ladekontakt 507 periodisch ein Signal auf die Ladekontakte senden. Durch den gleichzeitigen Empfang des ausgesendeten Bytes über den RX-Ladekontakt 507 ist auch dem Arbeitsgerät die im Zusammenhang mit der Basisstation beschriebene Eigenüberprüfung auf Kurzschluss der Ladekontakte möglich. Dieses Aussenden bzw. Empfangen von Datenblöcke 701 im Nichtdockingmodus des Arbeitsgeräts ist hier in Fig. 7 der Übersicht halber nicht gezeigt und ist insbesondere optional vorgesehen. Zum Zeitpunkt t₀ dockt dann das Arbeitsgerät an die Basisstation an. Bei Kontakt der zweiten Ladekontakte 507 des Arbeitsgeräts an den ersten Ladekontakten 505 der Basisstation detektiert das Arbeitsgerät über seine Ladekontakte 507 die Übertragung des von der Ladestation ausgesendeten Bytemusters, hier dem Byte 0xAA oder 0x55. Daraufhin stoppt das Arbeitsgerät sofort seine Antriebsmotoren und antwortet seinerseits mit einem Quittierungsmuster, beispielsweise 0x42. Das Quittierungsmuster bzw. Antwortbyte kann in das 1,95ms lange Sendepausenzeitfenster der Basisstation fallen und kann insofern sicher detektiert werden. Damit bestätigt das Arbeitsgerät der Basisstation das erfolgte Andocken.

Wenn das Arbeitsgerät nach begonnener Übertragung eines Datenpakets von seitens der Basisstation andockt, so tritt eine maximale Verzögerung von 4ms auf (Zeitpunkt t₁) und damit einhergehend eine verzögerte entsprechende Detektion und damit einhergehend eine Verzögerung der Einleitung des Antriebsmotorstopps auf. Die hier lediglich beispielhaften 4ms Verzögerung kommen zustande durch die Pausenzeit von 1,95ms plus abgeschlossener Empfang des ersten vollständigen 0x55-Datenpaketes plus die maximale Zeit eines ungültigen ersten Datenpakets (> 1 ms). Da typische Fahrgeschwindigkeiten im Andockmodus sehr niedrig sind, ist diese kurze Verzögerung unkritisch, da sich das Arbeitsgerät in einer solchen Zeitspanne lediglich im Millimeterbereich fortbewegen kann. Hier kann beispielsweise vorgesehen sein, dass ein Andockweg entsprechend lang ausgebildet ist Es kann insbesondere auch vorgesehen sein, dass die ersten und die zweiten Ladekontakte 505 und 507 Federn zum Abfedern des Arbeitsgeräts aufweisen.

Nach dem Motorstopp und der Rückantwort des Arbeitsgeräts kann nach dem Zeitpunkt t₂ eine weitere Kommunikation erfolgen. Beispielsweise kann eine I-dentitätsüberprüfung durch insbesondere einen Austausch eines Pincodes stattfinden. Nach Abschluss der Kommunikation oder auch nach Ablauf einer Wartezeit erhöht die Basisstation eine Spannung an den ersten Ladekontakten 505 auf eine Ladespannung, um den elektrischen Energiespeicher des Arbeitsgerätes zu laden.

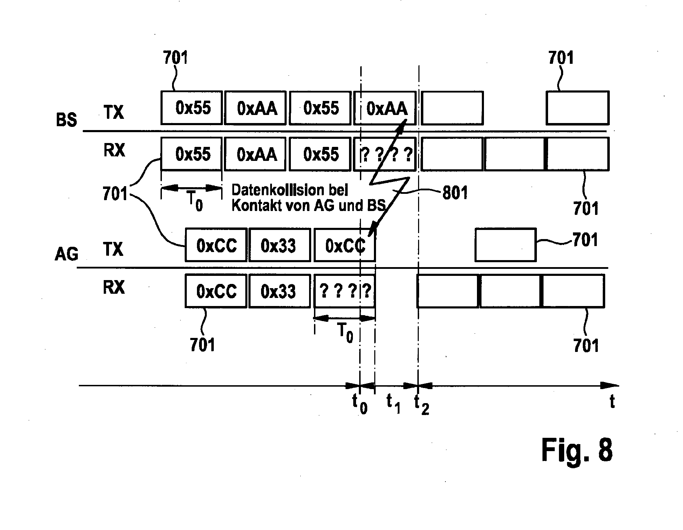

Fig. 8 zeigt eine weitere Variante der Andockerkennung. Hierbei senden sowohl die Basisstation als auch das Arbeitsgerät ein ständig wechselndes Signalmuster aus. Beispielsweise können folgende Bytes ausgesandt werden: 0x55 und 0xAA von der Basisstation und 0xCC und 0x33 vom Arbeitsgerät. Dadurch wird in vorteilhafter Weise insbesondere sichergestellt, dass jedes Bit seinen Status bei jedem Wechsel ändern muss, so dass insbesondere eine Plausibilisierung erreicht wird. Es können auch weitere Bitkombinationen vorgesehen sein. Solange kein Kontakt zwischen dem Arbeitsgerät und der Basisstation besteht, wird jeweils über die RX-Schaltung das ausgesendete Signal identisch empfangen. Dies dient insbesondere zur Selbstüberprüfung des Arbeitsgeräts bzw. der Basisstation. Wenn beispielsweise ein Kurzschluss der Ladekontakte 505 bzw. 507 vorliegt, so würde kein Signal mehr empfangen. Insbesondere bei einem Ausfall des TX- oder des RX-Schaltkreises kann gar kein Signal mehr oder lediglich ein statisches nicht mehr wechselndes Signal ausgesandt bzw. empfangen werden.

Beim Andocken empfangen die jeweiligen RX-Schaltkreise des Basisgeräts und des Arbeitsgeräts nicht mehr dass über ihren eigenen TX-Ladekontakt selbst ausgesandte Signal, sondern lediglich ein undefiniertes Signal, welches aufgrund der Datenkollision entsteht. Die Datenkollision wird mittels eines Doppelpfeiles in Blitzform dargestellt. Der Doppelpfeil ist mit dem Bezugszeichen 801 gekennzeichnet. Die undefinierten Signale bzw. die Datenkollision werden als Erfolg des Andocken interpretiert, so dass das Arbeitsgerät sofort die Antriebsmotoren stoppt. Durch die anschließend erfolgende Kommunikation kann dann weiterhin beispielsweise die Anwesenheit des korrekten Partners aufgrund eines Identifikationssignalaustausches verifiziert werden.

In den obigen Ausführungsbeispielen wurde eine sichere elektrische Ankopplung im Zusammenhang mit einem Arbeitsgerät beschrieben, welches sich in einem normalen Betriebsmodus befindet, d.h. insbesondere, dass die Systeme des Arbeitsgerätes in Betrieb sind. Der Akku des Arbeitsgeräts ist insbesondere nicht wegen Tiefentladeschutz abgeschaltet, so dass die Systeme in diesem Fall nicht in Betrieb wären. Ein solcher Zustand kann auch als ein toter bzw. elektrisch toter Zustand bezeichnet werden. Das Arbeitsgerät kann in diesem Fall auch als ein elektrisch totes Arbeitsgerät bezeichnet werden. Dies kann beispielsweise der Fall sein, wenn das Arbeitsgerät über den Winter oder einen langen Zeitraum außer Betrieb war, ohne vorher aufgeladen worden zu sein. Um einen empfindlichen Akkumulator, beispielsweise einen Lithium-Ionen-Akkumulator, vor einer schädlichen Tiefentladung zu schützen kann eine Schutzelektronik den Akkumulator abschalten, um eine weitere Entladung durch selbst geringe Ströme zu verhindern. Da in diesen Fällen die Systeme des Arbeitsgeräts einen Austausch von Kommunikationssignalen zwischen der Ladestation und dem angedockten Arbeitsgerät nicht mehr ermöglichen, wird erfindungsgemäß dem elektrischen Energiespeicher des Arbeitsgeräts bzw. der Mobilvorrichtung eine elektrische Notladeenergie zugeführt, wenn ein Ausbleiben von ausgetauschten Kommunikationssignalen zwischen der Ladestation und dem angedockten Energiespeicher erfasst wird. Beispielsweise kann hier das Andocken eines elektrisch toten Arbeitsgeräts durch einen Nutzer erfolgen, der den entladenen Energiespeicher bzw. das Arbeitsgerät selber manuell in die Basisstation einschiebt. Die elektrischen Systeme werden insbesondere erst nach einer Aufladung des Akkumulators auf eine Mindestladung wieder angeschaltet. Die dabei dem Akku zugeführte Notladeenergie ist dergestalt, dass sie vom Spannungspegel und/oder von der Stromstärke her derart begrenzt ist, dass sie zu keinem Zeitpunkt eine Gefahr für Lebewesen und/oder den zu ladenden Akku darstellt.

Bei bekannten Arbeitsgeräten wird das obige beschriebene Problem dadurch gelöst, dass das Arbeitsgerät durch ein externes Steckerladegerät aufgeladen werden muss, das am Arbeitsgerät direkt eingesteckt wird. Allerdings muss dieses externe Ladegerät dem Arbeitsgerät mitgeliefert werden, was den Kaufpreis erhöht, oder muss vom Benutzer separat gekauft werden, was einen zusätzlichen Aufwand erfordert und auch weitere Kosten mit sich bringt.

Da aber erfindungsgemäß die Ladestation beispielsweise ausgebildet sein kann, dem elektrischen Energiespeicher bzw. dem Arbeitsgerät eine Notladeenergie zuzuführen, kann auf dieses zusätzliche Ladegerät verzichtet werden, so dass in vorteilhafter Weise Kosten eingespart werden können. Insbesondere erfolgt dann die Mindestladung des entladenen Energiespeichers durch die Ladestation.

In diesem Zustand ist, wie oben beschrieben, der Aufbau einer Kommunikation zwischen dem Basisgerät und dem Arbeitsgerät nicht möglich, was insbesondere erforderlich ist, um beim Einsatz des oben beschriebenen Systems die an den Ladekontakten 505 der Basisstation anliegende sichere geringe Spannung auf die hohe Ladespannung zu erhöhen. Es wird daher in einen Notlademodus geschaltet, der das Laden des elektrischen Energiespeichers auf eine gewisse Mindestladung ermöglicht.

In dem Fall, dass die Kontrolleinheit auf dem Arbeitsgerät den Ladevorgang des elektrischen Energiespeichers steuert und überwacht, kann es insbesondere vorgesehen sein, dass die Aufladung auf die benötigte Mindestladung mit einer verringerten Ladeleistung erfolgt, da der Überwachungsschaltkreis im Arbeitsgerät aufgrund der Entladung gegebenenfalls nicht voll funktionsfähig ist. Beispielsweise kann die Aufladung zeitlich gesteuert sein, d.h., dass die Aufladung nach einer vorbestimmten Zeit gestoppt wird. Wenn dann die Mindestladung erreicht wird bzw. nach der vorbestimmten Zeit der Notladung, werden die elektrischen Systeme des Arbeitsgeräts bzw. der Mobilvorrichtung wieder angeschaltet. Dann kann auch wieder eine Kommunikation zwischen dem Arbeitsgerät und der Basisstation erfolgen, worauf der normale Ladevorgang gestartet wird. D.h., dass die volle Ladespannung an die ersten Ladekontakte 505 angelegt werden können. Es kann aber auch vorgesehen sein, dass aufgrund des Andockens der Mobilvorrichtung an der Ladestation die Kontrolleinheit auf dem Arbeitsgerät mit dem Anlegen der Ladespannung an den zweiten Ladekontakten 507 sofort betriebsbereit wird, so dass eine Kommunikation stattfinden kann und mit dem normalen Ladevorgang begonnen werden kann.

Es kann in nicht gezeigten Ausführungsformen vorgesehen sein, die Ladespannung an den ersten Ladekontakten 505 der Basisstation im Notlademodus freizuschalten, indem auf der Basisstation nicht gezeigte bestimmte Bedientasten in einer bestimmten Zeit und/oder in einer bestimmten Reihenfolge gedrückt werden, so dass in vorteilhafter Weise eine versehentliche/oder zufällige Aktivierung der Ladespannung unmöglich ist.

Ferner kann beispielsweise auch vorgesehen sein, dass auf dem Arbeitsgerät ein Magnet und auf der Basisstation ein Magnetsensor derart angeordneten werden, dass bei einem korrekten Andocken des Arbeitsgeräts an die Basisstation, was entweder automatisch im normalen Betriebsmodus oder manuell durch einen Benutzer geschehen kann, der Magnetsensor, welcher bevorzugt als ein magnetischer Schalter ausgebildet sein kann, durch den Magneten betätigt wird, was der Basisstation die Anwesenheit des Arbeitsgeräts an den Ladekontakten anzeigt. Bei entsprechendem Signal des Magnetsensors erhöht das Basisgerät die Spannung an den Ladekontakten 505 auf die Ladespannung. Ein derart eingesetztes System/Magnetsensor kann auch im normalen Betriebsmodus eine Robustheit des Gesamtsystems in vorteilhafter Weise erhöhen. Ein Magnetsensor kann beispielsweise ein Hallsensor, ein Hallschalter oder Reedkontakte sein.

Es kann auch vorgesehen sein, sowohl auf dem Arbeitsgerät als auch auf der Basisstation jeweils einen Magneten und einen Magnetsensor anzuordnen. Der Magnet auf dem Arbeitsgerät und der entsprechende Sensor auf der Basisstation bewirken ein Freischalten der hohen Ladespannung. Wenn der Magnetsensor auf dem Arbeitsgerät den Magneten der Basisstation detektiert, kann ein sofortiges Stoppen der Antriebsmotoren des Arbeitsgeräts erfolgen. Insbesondere kann hier vorzugsweise auf eine elektronische Kommunikation über die Ladekontakte 505 und 507 verzichtet werden, unter Beibehaltung der Grundfunktion Motorstopp und Ladespannung einschalten. Ein Austausch von Kommunikationssignalen findet also hier zwischen den Magneten und den Magnetsensoren statt. Hier werden also magnetische Kommunikationssignale ausgetauscht. In einer weiteren nicht gezeigten Ausführungsform kann vorgesehen sein, dass nur das Arbeitsgerät einen Magnetsensor und die Basisstation einen entsprechenden Magneten aufweisen. In einer weiteren nicht gezeigten Ausführungsform kann vorgesehen sein, dass der Magnet als Elektromagnet ausgeführt ist und insbesondere derart angesteuert werden kann, dass zwischen dem Elektromagneten und dem Magnetsensor Daten übertragen werden können.

Zusammenfassend wird insbesondere vorgeschlagen, dass mittels einer bidirektionalen Kommunikation über insbesondere bereits vorhandene elektrische Kontakte, vorzugsweise zwei Ladekontakte, eine eindeutige und sichere Identifikation von einer Ladestation und einer Mobilvorrichtung bzw. einem elektrischen Energiespeicher erfolgen kann, bevor eine Ladespannung auf die Ladekontakte geschaltet wird.

## Patentansprüche

1. Verfahren zum elektrischen Aufladen eines elektrischen Energiespeichers (201, 303) mittels einer Ladestation (101, 501), wobei ein elektrisches Andocken des elektrischen Energiespeichers (201, 303) an der Ladestation (101, 501) erfasst wird, wobei die Ladestation (101, 501) eine Ladeandockvorrichtung (503) umfassend zwei erste Ladekontakte (505) aufweist, wobei der Energiespeicher (201, 303) eine Energiespeicherandockvorrichtung (305) zum Andocken an die Ladeandockvorrichtung (503) der Ladestation (101, 501) aufweist, wobei die Energiespeicherandockvorrichtung (305) zwei zweite Ladekontakte (507) umfasst, **dadurch gekennzeichnet, dass** die Ladestation (101, 501) dem angedockten Energiespeicher (201, 303) eine elektrische Ladeenergie zuführt, wenn zwischen den ersten Ladekontakten (505) der Ladestation (101, 501) und den zweiten Ladekontakten (507) des angedockten Energiespeichers (201, 303) ausgetauschte Kommunikationssignale erfasst werden, wobei eine Spannung an den ersten Ladekontakten (505) der Ladestation (101, 501) erst nach Abschluss einer Kommunikation zwischen dem angedockten Energiespeicher (201, 303) und der Ladestation (101, 501) auf eine Ladespannung erhöht wird.

2. Verfahren nach Anspruch 1 oder 2, wobei die ausgetauschten Kommunikationssignale ein Identifikationssignal zum Identifizieren der Ladestation (101, 501) und/oder des Energiespeichers (201, 303) umfassen.

3. Verfahren nach einem der vorherigen Ansprüche, wobei das Zuführen der elektrischen Energie erst nach einer vorbestimmten Zeit nach dem Erfassen der ausgetauschten Kommunikationssignale durchgeführt wird.

4. Verfahren nach einem der vorherigen Ansprüche, wobei die Ladestation (101, 501) dem angedockten Energiespeicher (201, 303) eine elektrische Notladeenergie zuführt, wenn ein Ausbleiben von ausgetauschten Kommunikationssignalen zwischen der Ladestation (101, 501) und dem angedockten Energiespeicher (201, 303) erfasst wird.

5. Verfahren nach einem der vorherigen Ansprüche, wobei das Erfassen des Andockens des elektrischen Energiespeichers (201, 303) ein Beaufschlagen des elektrischen Energiespeichers (201, 303) mit einer elektrischen Größe umfasst.

6. Verfahren nach Anspruch 5, wobei ein Kondensator des elektrischen Energiespeichers (201, 303) geladen und ein zeitlicher Verlauf einer Kondensatorspannung gemessen wird.

7. Verfahren nach einem der vorherigen Ansprüche, wobei beim Andocken ein mittels der Ladestation (101, 501) mit elektrischer Energie versorgter elektrischer Schwingkreis elektrisch geschlossen wird.

8. Verfahren nach einem der vorherigen Ansprüche, wobei die Ladestation (101, 501) und/oder der elektrische Energiespeicher (201, 303) in einem nicht-angedockten Betriebzustand interne Diagnosesignale zum Detektieren eines elektrischen Kurzschlusses aussenden.

9. Ladestation (101, 501) zum elektrischen Aufladen eines elektrischen Energiespeichers (201, 303), umfassend:
- eine Ladeandockvorrichtung (103, 503) zum Andocken des elektrischen Energiespeichers (201, 303), wobei die Ladeandockvorrichtung (103, 503) zwei erste Ladekontakte (505) aufweist,
- einen Detektor (107) zum Detektieren des angedockten elektrischen Energiespeichers (201, 303) und
- eine Kontrolleinheit (113), welche ausgebildet ist, im Fall eines detektierten angedockten Energiespeichers (201, 303), eine Spannung an den ersten Ladekontakten (505) der Ladeandockvorrichtung (103, 503) erst nach Abschluss einer Kommunikation zwischen der Ladestation (101, 501) und dem angedockten Energiespeicher (201, 303) zu erhöhen,
- wobei der Detektor (107) einen Magnetsensor (109, 511) und/oder eine Kommunikationsschnittstelle (111) zum Austauschen von Kommunikationssignalen zwischen der Ladestation (101, 501) und dem angedockten elektrischen Energiespeicher (201, 303) aufweist.

## Claims

1. Method for electrically charging an electrical energy store (201, 303) by means of a charging station (101, 501), wherein electrical docking of the electrical energy store (201, 303) to the charging station (101, 501) is detected, wherein the charging station (101, 501) has a charging docking apparatus (503) comprising two first charging contacts (505), wherein the energy store (201, 303) has an energy store docking apparatus (305) for docking with the charging docking apparatus (503) of the charging station (101, 501), wherein the energy store docking apparatus (305) comprises two second charging contacts (507), **characterized in that** the charging station (101, 501) supplies electrical charging energy to the docked energy store (201, 303) when communication signals which are interchanged between the first charging contacts (505) of the charging station (101, 501) and the second charging contacts (507) of the docked energy store (201, 303) are detected, wherein a voltage across the first charging contacts (505) of the charging station (101, 501) is increased to a charging voltage only after communication between the docked energy store (201, 303) and the charging station (101, 501) is complete.

2. Method according to Claim 1, wherein the interchanged communication signals comprise an identification signal for identifying the charging station (101, 501) and/or the energy store (201, 303).

3. Method according to either of the preceding claims, wherein electrical energy is supplied only after a predetermined time following detection of the interchanged communication signals.

4. Method according to one of the preceding claims, wherein the charging station (101, 501) supplies electrical emergency charging energy to the docked energy store (201, 303) when an absence of interchanged communication signals between the charging station (101, 501) and the docked energy store (201, 303) is detected.

5. Method according to one of the preceding claims, wherein detection of docking of the electrical energy store (201, 303) comprises application of an electrical variable to the electrical energy store (201, 303).

6. Method according to Claim 5, wherein a capacitor of the electrical energy store (201, 303) is charged, and a time profile of a capacitor voltage is measured.

7. Method according to one of the preceding claims, wherein, during docking, an electrical resonant circuit which is supplied with electrical energy by means of the charging station (101, 501) is electrically closed.

8. Method according to one of the preceding claims, wherein, in an undocked operating state, the charging station (101, 501) and/or the electrical energy store (201, 303) send/sends internal diagnosis signals for detecting an electrical short circuit.

9. Charging station (101, 501) for electrically charging an electrical energy store (201, 303), comprising:
- a charging docking apparatus (103, 503) for docking the electrical energy store (201, 303), wherein the charging docking apparatus (103, 503) has two first charging contacts (505),
- a detector (107) for detecting the docked electrical energy store (201, 303), and
- a control unit (113) which, in the case of a docked energy store (201, 303) being detected, is designed to increase a voltage across the first charging contacts (505) of the charging docking apparatus (103, 503) only after communication between the charging station (101, 501) and the docked energy store (201, 303) is complete,
- wherein the detector (107) has a magnet sensor (109, 511) and/or a communication interface (111) for interchanging communication signals between the charging station (101, 501) and the docked electrical energy store (201, 303).

## Revendications

1. Procédé de charge pour la charge électrique d'un accumulateur d'énergie électrique (201, 303) au moyen d'une station de charge (101, 501), un amarrage électrique de l'accumulateur d'énergie électrique (201, 303) étant détecté au niveau de la station de charge (101, 501), la station de charge (101, 501) comportant un dispositif d'amarrage de charge (503) comprenant deux premiers contacts de charge (505), l'accumulateur d'énergie (201, 303) comportant un dispositif d'amarrage d'accumulateur d'énergie (305) à amarrer au dispositif d'amarrage de charge (503) de la station de charge (101, 501), le dispositif d'amarrage d'accumulateur d'énergie (305) comprenant deux deuxièmes contacts de charge (507), **caractérisé en ce que** la station de charge (101, 501) amène à l'accumulateur d'énergie (201, 303) amarré une énergie de charge électrique lorsque des signaux de communication échangés sont détectés entre les premiers contacts de charge (505) de la station de charge (101, 501) et les deuxièmes contacts de charge (507) de l'accumulateur d'énergie (201, 303) amarré, une tension étant accrue au niveau des premiers contacts de charge (505) de la station de charge (101, 501) juste à la fin d'une communication entre l'accumulateur d'énergie (201, 303) amarré et la station de charge (101, 501) pour atteindre une tension de charge.

2. Procédé selon la revendication 1, les signaux de communication échangés comprenant un signal d'identification pour identifier la station de charge (101, 501) et/ou l'accumulateur d'énergie (201, 303).

3. Procédé selon l'une quelconque des revendications précédentes, l'amenée d'énergie électrique se produisant après un temps prédéterminé après la détection des signaux de communication échangés.

4. Procédé selon l'une quelconque des revendications précédentes, la station de charge (101, 501) amenant à l'accumulateur d'énergie (201, 303) amarré une énergie électrique de charge d'urgence en l'absence de signaux de communication échangés entre la station de charge (101, 501) et l'accumulateur d'énergie (201, 303) amarré.

5. Procédé selon l'une quelconque des revendications précédentes, la détection de l'amarrage de l'accumulateur d'énergie électrique (201, 303) comprenant une alimentation de l'accumulateur d'énergie électrique (201, 303) avec une grandeur électrique.

6. Procédé selon la revendication 5, un condensateur de l'accumulateur d'énergie électrique (201, 303) étant chargé et une courbe dans le temps d'une tension de condensateur étant mesurée.

7. Procédé selon l'une quelconque des revendications précédentes, sachant que lors de l'amarrage, un circuit d'oscillation électrique alimenté en énergie électrique à l'aide de la station de charge (101, 501) est fermé électriquement.

8. Procédé selon l'une quelconque des revendications précédentes, la station de charge (101, 501) et/ou l'accumulateur d'énergie électrique (201, 303) envoyant des signaux de diagnostic internes dans un état de fonctionnement non amarré pour détecter un court-circuit électrique.

9. Station de charge (101, 501) pour la charge électrique d'un accumulateur d'énergie électrique (201, 303), comprenant :
- un dispositif d'amarrage de charge (103, 503) pour l'amarrage de l'accumulateur d'énergie électrique (201, 303), le dispositif d'amarrage de charge (103, 503) comportant deux premiers contacts de charge (505) ;
- un détecteur (107) pour détecter l'accumulateur d'énergie électrique (201, 303) amarré ; et
- une unité de contrôle (113) réalisée, en cas d'accumulateur d'énergie (201, 303) amarré détecté, pour n'accroître une tension au niveau des premiers contacts de charge (505) du dispositif d'amarrage de charge (103, 503) qu'à la fin d'une communication entre la station de charge (101, 501) et l'accumulateur d'énergie (201, 303) amarré ;
- le détecteur (107) comportant un capteur magnétique (109, 511) et/ou une interface de communication (111) pour échanger des signaux de communication entre la station de charge (101, 501) et l'accumulateur d'énergie électrique (201, 303) amarré.
